# EUROPEAN PATENT APPLICATION

(11) **EP 1 053 782 A1**
(43) Date of publication of application: **22.11.2000**
(21) Application number: 99108700.8
(22) Date of filing: 19.05.1999
(51) Int. Cl.: B01F 17/00

(54) **Method for manufacturing surfactant of natural plants**

(71) Applicant: Chen, Henry, Kuanhsi, Hsinchu (TW)
(72) Inventor: Chen, Henry, Kuanhsi, Hsinchu (TW)
(74) Representative: Casalonga, Axel

(57) **Abstract**

A method is used for manufacturing a surfactant with natural plants, such as with the fruits and leaves of sapindus mukorossi before they are cleaned and dried. The skin of the fruits is removed from the fruits and is mixed with the leaves. The skin of the fruits and the leaves are smashed and heated to form a sticky material. The sticky material is then filted to separate the fiber materials and the juice of the smashed and heated skin of the fruits and the leaves from each other. The juice thus made is the surfactant required to be made.

## Description

The invention relates to a method for manufacturing the surfactant of natural plants.

Typical laundry detergents and emulsifiers are made of or are added with a number of chemical materials and/or bleacher materials and/or fluorescent materials. The formulas of the detergents of the manufacturing companies are different from each other and may generate different cleaning effects. Some of the detergents may generate a great amount of foam and may not be easily removed from the objects after flushing with water. The other detergents generate few foam and thus may not be used for effectively cleaning the objects. In addition, most of the detergents may hurt the keratin in the palms of the human body. After use, the chemical components and the fluorescent materials may badly pollute our environment.

The invention is to provide a method for manufacturing the surfactant of natural plants which contain no chemical materials and which will not pollute our environment and which include excellent cleaning and foaming and/or emulsifying effects.

One kind of the natural plants is the sapindus mukorossi whose fruits and leaves may be used to manufacture the surfactant. The leaves of the sapindus mukorossi contain sapindoside A, rutin, kaempferol, apigenin, vitamin C, and the fruits of the sapindus mukorossi contain sapindoside A,B,C,D,E, hederagenin, rutin, a great amount of vitamin C, tyrosine, glycine, alanine etc.

The fruits and the leaves of the sapindus mukorossi are cleaned with water in order to remove the dirt and are then dried by such as wind or heat or by disposing in the environment for removing the water or the humidity from the fruits and the leaves. The skin or the peel of the fruits of the sapindus mukorossi are then removed or peeled off from the fruits. The skin of the fruits and the leaves of the sapindus mukorossi are used for manufacturing the surfactant and are smashed and then heated and preferably heated to the temperature close to the boiling temperature of the water to form a gluey and sticky material. The smashed skin of the fruits and leaves may be heated with steam or may be heated within water. When the smashed skin of the fruits and leaves are heated, the smashed skin of the fruits and leaves are stirred for allowing the smashed skin of the fruits and leaves to be completely and uniformly heated and for allowing the required materials to be extracted from the smashed skin of the fruits and the leaves. The smashed and the heated skin of the fruits and the leaves are then filtered to separate the fiber materials and the juice from each other. The juice of the smashed and the heated skin of the fruits and the leaves is then cooled to form the required surfactant to be made.

The surfactant materials made by the method contain the natural plants only and contain no chemical materials and will not pollute our environment and include excellent cleaning and foaming and/or emulsifying effects without hurting the hands of the human bodies. The surfactant materials may be diluted before use and may be widely used for cleaning the clothes, floors, vehicles, glasses, kitchen utensils, dinner sets, fruits and vegetables, leather goods, and may be used for bathing and for washing hair, etc.

## Claims

1. A method for manufacturing a surfactant with natural plants, the method comprising:
preparing fruits and leaves of sapindus mukorossi,
cleaning and drying the fruits and the leaves of the sapindus mukorossi,
removing skin of the fruits,
smashing the skin of the fruits and the leaves of the sapindus mukorossi,
heating the smashed skin of the fruits and leaves, and
filtering the smashed and heated skin of the fruits and the leaves to separate fiber materials and juice of the smashed and heated skin of the fruits and the leaves from each other,
the juice of the smashed and heated skin of the fruits and the leaves being the surfactant.

2. The method as claimed in claim 1, wherein the smashed skin of the fruits and leaves are heated to a temperature close to a boiling temperature of water to form a sticky material.

3. The method as claimed in claim 1 further comprising stirring the smashed skin of the fruits and leaves for uniformly heating the smashed skin of the fruits and leaves when the smashed skin of the fruits and leaves are heated.
